# EUROPÄISCHE PATENTSCHRIFT

(11) **EP 3 709 278 B1**
(45) Veröffentlichungstag und Bekanntmachung des Hinweises auf die Patenterteilung: **22.11.2023**
(21) Anmeldenummer: 20161959.0
(22) Anmeldetag: 10.03.2020
(51) Int. Cl.: G08G 1/01, G07C 5/00, G06Q 50/30, G06F 17/40, G06F 11/30, G06Q 10/047, G06Q 10/06, G06Q 10/08, G06Q 50/26, G06Q 50/28, H04W 4/024, H04W 4/44

(54) **ERHEBEN VON FAHRZEUGBASIERTEN, ORTSBEZOGENEN DATENSÄTZEN**
RECORDING OF VEHICLE-BASED LOCATION-RELATED DATA RECORDS
DISPOSITIF DE COLLECTE EMBARQUÉ D'ENSEMBLES DE DONNÉES CONCERNANT L'EMPLACEMENT

(30) Priorität: 11.03.2019 DE 102019001735
(43) Veröffentlichungstag der Anmeldung: 16.09.2020
(73) Patentinhaber: VOLKSWAGEN AG, 38440 Wolfsburg (DE); Audi AG, 85045 Ingolstadt (DE)
(72) Erfinder: Fangwa Nzeya, Edson William, 85051 Ingolstadt (DE); Max, Stephan, 38518 Gifhorn (DE)
(74) Vertreter: Rittner, Karsten

(56) Entgegenhaltungen:
- EP-B1- 2 002 369
- DE-A1-102015 118 093
- DE-A1-102016 110 794
- US-A1- 2015 088 335

## Beschreibung

Die Erfindung betrifft ein Verfahren zum Erheben von fahrzeugbasierten Daten, insbesondere Umfelddaten, und deren Übermittlung an einen Backend-Rechner, wobei die betreffenden Datensätze vorgegebene Streckenabschnitte betreffen, die von einem Schwarm von datensammelnden Fahrzeugen befahren werden, sowie eine entsprechende Vorrichtung.

In den vergangenen Jahren sind vielfältige interaktive elektrische Seriensysteme zur Unterstützung des Fahrers entwickelt worden. Die integrierten Assistenz- und Komfortsysteme erfassen mit diversen Sensoren das Umfeld des Fahrzeugs, um die Fahrt sicherer und komfortabler zu gestalten, und erzeugen auf diese Weise aktuelle Daten über das gerade befahrene Umfeld, also den aktuell befahrenen Streckenabschnitt.

Da die Fahrzeuge bereits mit diversen Sensorsystemen ausgestattet sind, ist es sinnvoll diese Daten zu sammeln und übergreifend zu nutzen. Verstärkt wird dieser Trend durch zwei veränderte Rahmenbedingungen. Zum einen sind bisher optional angebotene Systeme durch die stetig steigenden Sicherheitsanforderungen von beispielsweise NCAP (NCAP: New Car Assessment Programme bzw. Europäisches Neuwagen-Bewertungs-Programm) zur Serienausstattung geworden. Zum anderen ist durch den Zwang zum elektronischen Notrufsystem, auch eCall genannt, eine Mobilfunkanbindung im Fahrzeug gesetzlich vorgeschrieben. Daher können die Umfelddaten direkt ortsbezogen und zeitsynchronisiert erhoben und kommuniziert werden.

Im Fahrzeug selbst werden unterschiedliche Datenklassen erfasst. Hinsichtlich Umfeld werden die Daten wie folgt unterteilt:
- Geoinformationen, welche die geographische Phänomene betreffen, die direkt und indirekt mit einer auf die Erde bezogene Position verbunden sind,
- Verkehrsdaten, also eine Beschreibung der Zustände aller am Verkehr beteiligten Objekte,
- Ortsbezogene Ereignisdaten, wie beispielsweise punktuell auftretende lokale Gefahrenstellen, und
- Ortsbezogene Zustandsdaten, nämlich kontinuierlich erfassbare Daten wie beispielsweise Temperatur, Parkplatzbelegung, Ampelzustand, Wechselverkehrszeichen, etc.

In bisherigen Systemen werden die Daten einfach aus dem Fahrzeug direkt weitergeleitet. Hierbei wurden Datenpakete im Fahrzeug erfasst und unverändert an das Backend gesendet. Eine intelligente Verarbeitung wurde nicht vorgenommen.

Die Druckschrift DE 10 2014 203 993 A1 beschreibt ein System mit einem Prozessor, der dazu dient Überwachungserfordernisse für einen Straßenabschnitt zu projizieren. Der Prozessor ist weiter ausgelegt, um ein oder mehrere sich während eines Zeitraums eines Überwachungserfordernisses auf dem Straßenabschnitt fortbewegende Fahrzeuge zu kontaktieren. Der Prozessor ist zusätzlich konfiguriert, um eine erste Anzahl, bestimmt basierend auf einem projizierten Überwachungserfordernis, von kontaktierten Fahrzeugen zu Verkehrsdatenüberwachung und -berichterstattung für den Straßenabschnitt anzuweisen.

Die Druckschrift DE 10 2011 106 295 A1 betrifft ein Verfahren zum bidirektionalen Übertragen von Daten zwischen Kraftfahrzeugen und einem Dienstanbieter, mit Bereitstellen der von den Kraftfahrzeugen empfangbaren und von dem Dienstanbieter stammenden Informationsdaten über eine Dateninfrastrukturwolke und Bereitstellen von einen Verkehrszustand beschreibenden und von den Kraftfahrzeugen stammenden Verkehrsdaten. Um ein sicheres bidirektionales Übertragen der Daten zu ermöglichen, ist ein ausschließliches Bereitstellen der Verkehrsdaten an den Dienstanbieter über eine von einem Sicherheitsbetreiber betriebene Backend-Servervorrichtung vorgesehen.

Die Druckschrift DE 11 2015 005 996 T5 beschreibt ein System zum Sammeln von Fahrzeugdatendaten. Dabei übermittelt ein Zentrum einem Subjektfahrzeug durch Drahtloskommunikation einen Typ von zu sammelnden Fahrzeugdaten, einen Bedingungsausdruck, der beim Sammeln der Fahrzeugdaten verwendet wird, einen Abtastzyklus beim Sammeln der Fahrzeugdaten und/ oder einen Überprüfungszyklus des Bedingungsausdrucks. Ein zentrumsseitiger Überprüfungsabschnitt überprüft basierend auf seinem eigenen Überprüfungskriterium die Angemessenheit mindestens eines des Typs der Fahrzeugdaten, des Bedingungsausdrucks, des Abtastzyklus, und des Überprüfungszyklus. Ein fahrzeugseitiger Überprüfungsabschnitt überprüft, ob die Ressourcen des Subjektfahrzeugs angemessen sind, wenn die Fahrzeugdaten basierend auf der Vorschrift vom Zentrum gesammelt werden.

Die Druckschrift DE 10 2015 219 783 B3 betrifft ein Verfahren für die Steuerung von erfassten Daten von einer Vielzahl von Fahrzeugen, wobei Daten anonymisiert werden und eine Datenreduktion vorgesehen ist. Die Steuerung besteht zwischen den Einheiten jedes Fahrzeuges, zwischen der Vielzahl von Fahrzeugen und einem Backend des Systems, zwischen den Einheiten des Backends und auch möglicherweise zwischen den Einheiten des Backends und mindestens einem externen Diensteanbieter. Die Datenreduktion wird durch die Vermeidung von Übertragung von redundanten Daten bzw. durch die Vermeidung von unnötiger Datenerfassung erreicht.

Die Druckschrift DE 10 2016 110 794 A1 betrifft ein Informationssammelsystem, welches ein Fahrzeug und einen Server umfasst. Fahrzeugereignisdaten werden für ein detektiertes Fahrzeugereignis abgespeichert. Ein erstes Übertragungssignal wird von dem Fahrzeug an den Server gesendet, um diesen zu informieren, dass das Fahrzeugereignis detektiert wurde. Wenn eine Informationserfassungsbedingung erfüllt ist, wird eine Hochladeanforderung an das Fahrzeug gesendet, welches daraufhin die Fahrzeugereignisdaten an den Server überträgt.

Nachteile von bekannten Lösungen sind:
- höhere Datenkosten, und
- geringere Flexibilität bei veränderten Anforderungen bzw. langsame Umsetzung von neuen Funktionen.

Angenommen wird, dass das Backend in der Lage ist, Daten vom Fahrzeug per Anfrage zu erhalten. Diese Anfrage wird über eine Auftragsdatenbank gesteuert, welche den Datenbedarf von den Fahrzeugen im Schwarm beschreibt.

Der Erfindung liegt die Aufgabe zugrunde, eine orts- und zeitbezogene Steuerung der Erhebung von fahrzeugbezogenen Daten eines Schwarms von Fahrzeugen zu optimieren.

Diese Aufgabe wird gelöst durch ein Verfahren mit den Merkmalen des Anspruchs 1 sowie durch eine Vorrichtung mit den Merkmalen des Anspruchs 12. Bevorzugte Ausgestaltungen der Erfindung sind Gegenstand der Unteransprüche.

Bei dem erfindungsgemäßen Verfahren zum Erheben von fahrzeugbasierten Daten, insbesondere Umfelddaten, und deren Übermittlung an einen Backend-Rechner, wobei die betreffenden Datensätze vorgegebene Streckenabschnitte betreffen, die von einem Schwarm von datensammelnden Fahrzeugen befahren werden, sind im Backend-Rechner parametrisierte Aufträge zur Ermittlung von fahrzeugbasierten Daten abgelegt, wobei jeder Auftrag zumindest die folgenden Parameter umfasst:
- den Parameter Streckenabschnitt, der den Streckenabschnitt definiert, für den fahrzeugbezogene Daten erhoben werden sollen,
- den Parameter Schwarmgröße, der definiert wie viele Fahrzeuge pro Zeiteinheit für den genannten Streckenabschnitt Daten erheben sollen, und
- den Parameter Zeitintervall, der definiert, in welchem Zeitintervall Daten für den Streckenabschnitt erfasst werden sollen.

Dabei werden von jedem Fahrzeug des Schwarms fortlaufend streckenbezogene Daten in Form eines Headers an den Backend-Rechner übermittelt, wobei ein Header eine Zusammenfassung der temporär im Fahrzeug gespeicherten fahrzeugbasierten Daten ist. Ein übermittelter Header wird mit den durch die Parameter Streckenabschnitt, Schwarmgröße und Zeitintervall definierten Anforderungen der Aufträge verglichen, und im Fall eines positiven Vergleichs wird der Header als abruffähig klassifiziert, so dass der dem Header zugeordnete Datensatz aus dem Fahrzeug abgerufen und einer weiteren Verarbeitung zugeführt werden kann.

Die Definition des Streckenabschnitts kann dabei über GPS-Punkte erfolgen, die den Anfang und das Ende des Streckenabschnitts definieren, wobei die Anfangs- und Endpunkte gleichzeitig die Fahrtrichtung vorgeben können. Weiterhin kann der Streckenabschnitt durch eine Folge von GPS-Punkten definiert sein, was einer Trajektorie entsprechen würde. Ferner kann der Streckenabschnitt oder die Trajektorie innerhalb einer digitalen Karte festgelegt werden.

Vorzugsweise werden aktuell nicht benötigte Header für einen vorgegebene Zeitraum gespeichert. Weiter bevorzugt werden aktuell nicht benötigte Header innerhalb des vorgegeben Zeitraums mit den definierten Anforderungen der Aufträge verglichen. Auf diese Weise können auch aktuell nicht benötigte Header eventuell ausgewertet werden.

Weiter bevorzugt ist dem Parameter Zeitintervall jedes Auftrags eine Wiederholungsfrequenz zugeordnet, mit der der Auftrag wiederholt wird. Auf diese Weise kann das Überwachungsintervall in vorgegebener Weise wiederholt werden, wie beispielsweise eine Überwachung eines vorgegebenen Streckenabschnitts von 9:00 h bis 10:00 h, wobei die Messungen für das gleiche Zeitintervall von Montag bis Freitag wiederholt werden sollen.

Vorzugsweise umfasst jeder Auftrag die weiteren Parameter
- bereits angeforderte Datensätze und
- bereits empfangene Datensätze, wobei
diese Parameter zur Überwachung der Ausführung der Aufträge dienen.

Weiter bevorzugt wird im Fall eines Abrufs eines abruffähigen Headers die Anforderung des Abrufs im Parameter "bereits angeforderte Datensätze" vermerkt und im Fall eines Empfangs des angeforderten Datensatzes wird dies im Parameter "bereits empfangene Datensätze" vermerkt. Auf diese Weise ist der jeweilige Auftrag über den Fortschritt der Bearbeitung informiert.

Weiter bevorzugt wird jeder abruffähige Header zusammen mit weiteren Parametern in einem Abrufregister abgelegt, über welches der Abruf der dem Header zugehörigen Datensatz aus dem jeweiligen Fahrzeug erfolgt. Mittels des Abrufregisters können die Abrufe entsprechend organisiert werden.

In einer ersten Ausführungsform wird vorzugsweise jedem abruffähigen Header jeweils ein Abrufregister zugeordnet, mittels dem der Abruf des dazugehörigen Datensatzes aus dem Fahrzeug erfolgt.

In einer zweiten Ausführungsform wird vorzugsweise jedem abruffähigen Header jeweils ein Abrufregister zugeordnet, wobei jedem Abrufregister ein Auftrag zugeordnet ist und ein Abrufregister mehr als einen Header aufweist. Auf diese Weise kann ein Abrufregister die den Header zugeordneten Datensätze aus den Fahrzeugen sozusagen blockweise abrufen.

Weiter bevorzugt werden die den Headern eines Abrufregisters zugeordneten Datensätze aus den entsprechenden Fahrzeugen dann abgerufen, wenn die Anzahl der Header eines Abrufregisters einen vorgegebenen Wert erreicht, wobei insbesondere der vorgegebene Wert der Schwarmgröße des jeweiligen Auftrags entspricht. Auf diese Weise wird der Abruf der Datensätze aus den Fahrzeugen optimiert.

In der erfindungsgemäßen Vorrichtung zum Erheben von fahrzeugbasierten Daten, insbesondere Umfelddaten, und deren Übermittlung an einen Backend-Rechner, wobei die Vorrichtung zur Durchführung des im Vorangegangenen geschilderten Verfahrens eingerichtet und ausgelegt ist, umfasst der Backend-Rechner:
- eine Auftragsverwaltung zur Verwaltung der Aufträge,
- eine Verarbeitungseinrichtung zur Verarbeitung und Klassifizierung der eingehenden Header der Fahrzeuge des Schwarms, und
- eine Abrufeinrichtung mit Abrufregistern zum Abrufen der den als abruffähig klassifizierten Headern zugehörigen Datensätzen aus den Fahrzeugen des Schwarms.

Vorzugsweise umfasst der Backend-Rechner weiter
- eine Fahrzeugverwaltung, die mit den Fahrzeugen kommuniziert und die den Headern zugeordneten Datensätze aus den Fahrzeugen des Schwarms abruft, und
- eine Datensatzverwaltung zur Verwaltung und Bearbeitung der abgerufenen Datensätze.

Weiter bevorzugt weist der Backend-Rechner eine Einrichtung zur temporären Speicherung aktuell nicht benötigter Header auf, die zur Erfüllung der Aufträge herangezogen werden können.

Die Vorteile des oben erläuterten Verfahrens und der entsprechenden Vorrichtung liegen darin begründet, dass innerhalb der Auftragsdatenbank, also der Auftragsverwaltung, ein Mechanismus existiert, welcher die regelmäßige Überwachung eines Ortes ermöglicht. Hierzu wird ein Auftrag erstellt, für eine vorgegebene Trajektorie in der erforderlichen Anzahl von Fahrzeugen gewünschte Datensätze einer oder mehrerer Datenklassen zu erheben. Werden entsprechend passende Fahrzeuge gefunden, so werden hier die Datensätze in der geforderten Anzahl innerhalb des insbesondere periodischen Zeitintervalls erhoben. Weitere passende Daten, welche nicht benötigt werden, werden in einer Warteliste zurückgestellt. Werden die Aufträge von den Fahrzeugen erfolgreich bearbeitet, werden diese als bearbeitet erkannt. Werden die Aufträge nicht innerhalb einer definierten Zeitspanne bearbeitet, werden weitere Daten von Fahrzeugen aus der Warteliste angefordert. Nach Ablauf der zeitlichen Periode wird der Grad der Auftragserfüllung zurückgesetzt und neue Daten von Fahrzeugen werden für die nächste Periode angefragt.

Diese Art der Auftragsgenerierung passt ideal an den Bedarf der Funktionen im Backend-Rechner bzw. später im Fahrzeug. Wird beispielsweise eine Aktualität von einer Navigationskarte von einen Tag gefordert, was aus Robustheitsgründen mit z.B. fünf Schwarmfahrzeugen vermessen und abgesichert werden sollte, so kann dies mit dem beschriebenen Verfahren durchgeführt werden, da genau diese Messungen aus dem Fahrzeugschwarm extrahiert werden können.

Bevorzugte Ausführungsformen der Erfindung werden nachfolgend anhand der Zeichnungen erläutert. Dabei zeigt
- Fig. 1: eine erste Ausführungsform des Verfahrens zur Sammlung von fahrzeugbasierten Daten mittels eines Backend-Rechners,
- Fig. 2: die Auftragsverwaltung in größerem Detail,
- Fig. 3: die Verwaltung der Datenabrufe in einer ersten Ausführungsform, und
- Fig. 4: die Verwaltung der Datenabrufe in einer zweiten Ausführungsform.

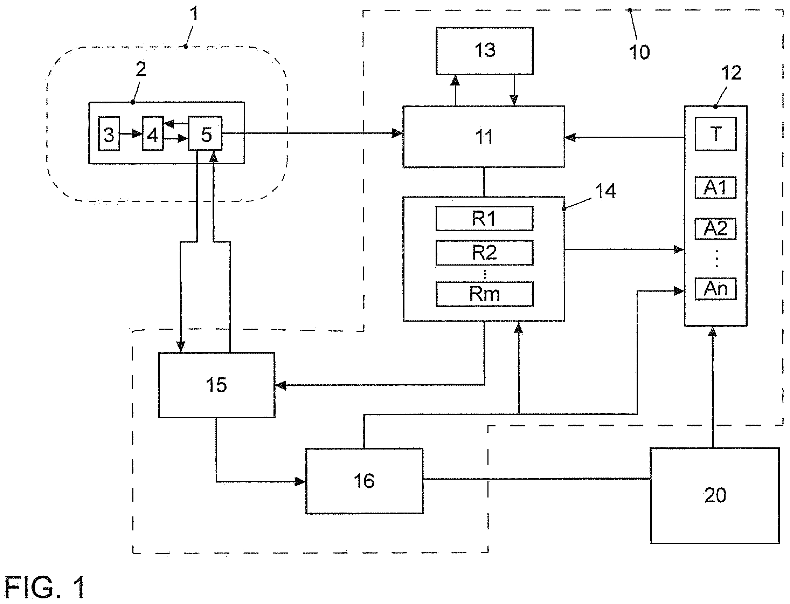

Figur 1 zeigt einen Schwarm 1, der hier in der Form eines einzelnen Fahrzeuges 2 dargestellt ist, wobei jedes Fahrzeug 2 des Schwarms 1 sich entlang eines nicht dargestellten Streckenabschnitts bewegt und mittels seiner Umfeldsensorik 3 während der Fahrt entlang des Streckenabschnitts das Umfeld des Fahrzeugs betreffende Daten aufsammelt, die in einem Datenaggregator 4 des Fahrzeugs 2 gesammelt und mit Zeitstempel und Positionsangaben sowie einer Identifikationsnummer des Fahrzeugs 2 temporär abgespeichert werden. Der Datenaggregator 4 des Fahrzeugs 2 hat ferner die Aufgabe eine Zusammenfassung für die aufgesammelten Daten des befahrenen Streckenabschnitts zu erstellen, den sogenannten Header. Dabei umfasst der Header zumindest Positionsangaben und Zeitangaben zu dem befahrenen Streckenabschnitt, sowie die Art der gesammelten Umfelddaten, also um welche der oben genannten Datenklassen es sich bei den aufgesammelten Daten handelt, und eine Identifikation des datensammelnden Fahrzeugs, die beispielsweise mit der Fahrzeugidentifikationsnummer verknüpft ist.

Die von jedem Fahrzeug 2 des Schwarms 1 erzeugten Header bezüglich gefahrener Streckenabschnitte werden drahtlos, d.h. per Mobilfunk, einem Backend-Rechner 10 zugeführt, der in einer Verarbeitungseinrichtung 11 die zugeführten Header verarbeitet. Die Verarbeitung der Header in der Verarbeitungseinrichtung 11 wird von einer Auftragsverwaltung 12, die beispielsweise in der Form einer Auftragsdatenbank vorliegt, gesteuert. Dabei umfasst die Auftragsverwaltung 12 einen Zeitgeber oder Timer T sowie die aktuellen Aufträge A1, A2 bis An, wobei der Timer T den zeitlichen Ablauf der Aufträge A1 bis An einschließlich möglicher zeitlicher Wiederholungen steuert. Die in der Auftragsverwaltung 12 vorliegenden Aufträge A1, A2 bis An betreffen die Bereitstellung von fahrzeugbezogenen Daten bezüglich gewünschter Streckenabschnitte zu gewünschten Zeiten.

So kann beispielsweise der Auftrag A1 die Verkehrsdichte auf einem vorgegebenen Streckenabschnitt einer Fahrtroute zwischen einer Anfangs- und Endposition zu einem vorgegebenen Zeitintervall, beispielsweise morgens von 8:00 Uhr bis 9:00 Uhr, betreffen, wobei der Auftrag periodisch wiederholbar ist, also beispielsweise von Montag bis Freitag jeweils zu dem angegebenen Zeitintervall.

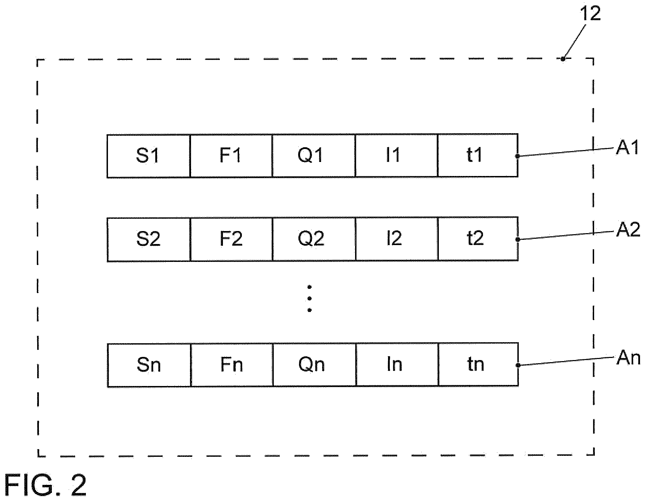

Die Aufträge A2 bis An sind in gleicher Weise strukturiert und können andere Streckenabschnitte und andere Umfelddaten betreffen, beispielsweise die Witterungsverhältnisse entlang eines vorgegebenen Streckenabschnitts innerhalb eines gewünschten Zeitintervalls. Ferner ist in jedem Auftrag die Größe des Fahrzeugschwarms 1 angegeben, mit anderen Worten wie viele Fahrzeuge 2 innerhalb des festgelegten Zeitintervalls fahrzeugbezogene Daten bezüglich des vorgegebenen Streckenabschnitts liefern sollen. Die Festlegung und Definition der Aufträge A1 bis An werden von einem externen Nutzer 20 erstellt und von diesem an die Auftragsverwaltung 12 übermittelt. Eine detaillierte Erläuterung der Auftragsverwaltung 12 erfolgt weiter unten anhand der Fig. 2.

In der Verarbeitungseinrichtung 11 der Header wird ein von einem Fahrzeug 2 eingehender Header anhand der Auftragsverwaltung 12 dahingehend überprüft, ob der Header Daten eines Streckenabschnitts betrifft, welche von einem der in der Auftragsverwaltung 12 vorliegenden Aufträge A1, A2, ..., An angefragt wird. Ferner wird in der Verarbeitungseinrichtung 11 überprüft, ob der betrachtete Header neben dem Streckenabschnitt mit den von den Aufträgen A1, A2, ..., An gesetzten Zeitintervallen und gewünschten Umfelddaten, also den gewünschten Datentypus, übereinstimmt. Ist dies für einen von einem Fahrzeug 2 des Schwarms 1 empfangenen Header der Fall, so wird dieser als abruffähig klassifiziert und einer Abrufverwaltung 14 zugeführt, welche für die Verwaltung der Abrufe des einem Header zugehörigen Datensatzes aus dem entsprechenden Fahrzeug 2 zuständig ist.

Aktuell nicht benötigte Header können in einem Einrichtung 13 zur Verwaltung und temporären Speicherung zwischengespeichert werden, wobei aktuell nicht benötigte Header nach Ablauf einer vorgegebenen Haltezeit gelöscht werden. Es handelt sich bei der Einrichtung 13 sozusagen um einen Wartebereich für Header.

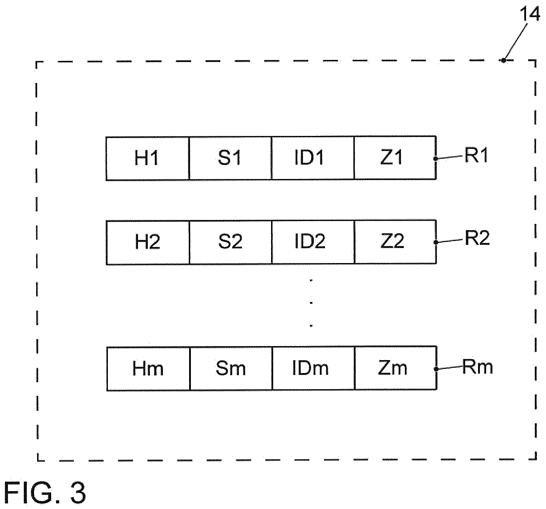

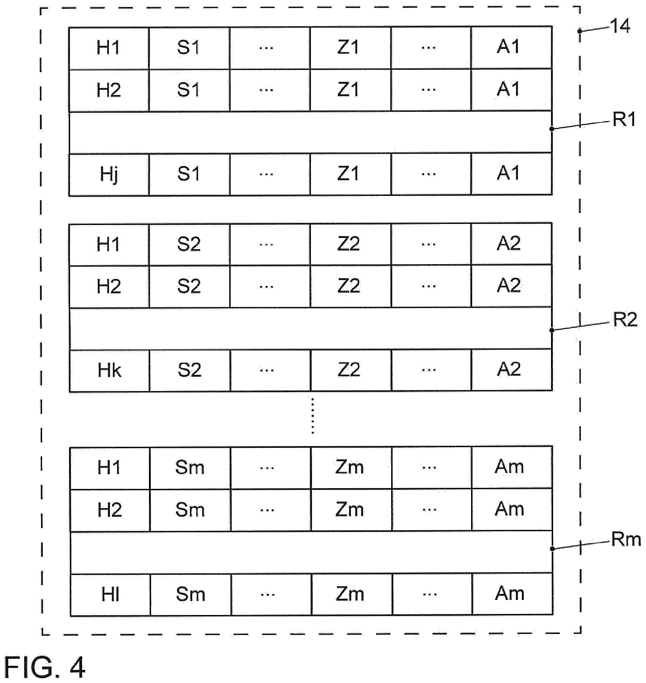

Die Abrufverwaltung 14 legt für alle Header, für die ein Auftrag A1 bis An existiert und deren komplette Datensätze aus den Fahrzeugen 2 abzurufen sind, Abrufregister R1, R2 bis Rm an, die im folgenden zum besseren Verständnis kurz als Abrufe bezeichnet werden, deren genauere Funktionalität nachfolgend anhand der Figuren 3 und 4 erläutert wird. Die Abrufverwaltung 14 weist anhand der Abrufe R1, R2 bis Rm die Fahrzeugverwaltung 15 an die entsprechenden Fahrzeuge 2 aufzufordern, die den jeweiligen abruffähigen Headern zugehörigen Datensätze zu übermitteln. Ferner informiert die Abrufverwaltung 14 die Auftragsverwaltung 12 über die initiierten Abrufe R1, R2, ..., Rm, so dass die Auftragsverwaltung über den aktuellen Status der einzelnen Aufträge A1, ..., An im Bilde ist.

Zum Abrufen der Datensätze aus den Fahrzeugen 2 wird anhand der in den Abrufen R1 bis Rm verzeichneten Fahrzeugkennungen die Kommunikationseinrichtung 5 der einzelnen Fahrzeuge 2 von der Fahrzeugverwaltung 15 zur Übermittlung der den Headern zugehörigen Datensätze aufgefordert. Dazu extrahiert die Kommunikationseinrichtung 5 des Fahrzeugs 2 die entsprechenden kompletten Datensätze aus dem Datenaggregator 4 und überträgt die Datensätze an die Fahrzeugverwaltung 15.

Die Fahrzeugverwaltung 15 leitet die diversen Datensätze der Fahrzeuge 2 weiter an eine Datensatzverwaltung 16, die die Datensätze sammelt und formatiert. Ferner kann in der Datensatzverwaltung 16 eine Verschleierung der Datensätze vorgenommen werden, so dass der Ursprung der Datensätze nicht zurückverfolgt werden kann. Die aufbereiteten Datensätze werden dann von der Datensatzverwaltung 16 an den Auftraggeber 20 zur Weiterverarbeitung und Auswertung zugeführt.

Fig. 2 zeigt die Organisation des der Auftragsverwaltung 12 im Detail. In der Auftragsverwaltung 12 sind Aufträge A1, A2 bis An angelegt, wobei n eine natürliche Zahl bedeutet. Dabei umfasst jeder Auftrag Ai, i ∈ {1, ..., n}, n eine natürliche Zahl, eine vorgegebene Menge an Parametern Si, Fi, Qi, li und ti, und zwar zumindest die Information, über welchen Streckenabschnitt Si Daten aufgesammelt werden sollen, ferner eine Sollzahl Fi an Datensätzen, die angibt, wie viele Fahrzeuge pro Zeiteinheit für den Streckenabschnitt Daten aufsammeln sollen, also die Schwarmgröße pro Zeiteinheit, die Anzahl Qi an Datensätzen, die für den Streckenabschnitt Si bereits angefordert wurden, und die Anzahl an Datensätzen li, die für den Streckenabschnitt Si bereits empfangen wurden, also den Ist-Zustand der empfangenen Datensätze. Ferner ist noch der Parameter Zeitintervall ti für den Auftrag Ai vorhanden, der vorgibt innerhalb welchen Zeitintervalls der Auftrag Ai abgearbeitet werden muss. Dabei kann der Parameter Zeitintervall ti die Information enthalten mit welcher Frequenz die Aufträge wiederholt werden sollen. Weitere Parameter, die den Auftrag Ai charakterisieren, können im Parametersatz enthalten sein. Mit anderen Worten, die Aufzählung der Parameter ist nicht abschließend.

Ein beispielhafter Parametersatz eines Auftrags A1 enthält daher die Angabe des Streckenabschnitt S1, für den Daten zu beschaffen sind, die Angabe F1, dass Daten von 10 Fahrzeugen pro Stunde gesammelt werden sollen, die Angabe Q1, dass 5 Datensätze bereits angefordert sind, und die Angabe 11, dass bereits 2 Datensätze empfangen wurden. Ferner umfasst der Auftrag A1 noch die Angabe t1, dass die Datensätze im Zeitintervall von 8 h bis 10 h sowie von Montag bis Freitag gesammelt werden sollen. Für die Parameter der Aufträge A2 bis An gilt entsprechendes.

Fig. 3 erläutert die Funktionsweise der Abrufverwaltung 14 in einer ersten Ausführungsform. In der Abrufverwaltung 14 sind Abrufregister R1, R2, ..., Rm, m eine natürliche Zahl, eingerichtet, wobei jedes Abrufregister Ri, i ∈ 1, ..., m, zumindest die folgenden Parameter umfasst:
- einen Header Hi, der einen aus einem Fahrzeug 2 abzurufenden Datensatz charakterisiert,
- den zu dem Header Hi gehörigen Streckenabschnitt Si,
- eine Abfrageidentifizierung IDi zur Identifizierung der Abfrage Ai mit dem Auftrag Ai, sowie
- einen Zustandsparameter Zi, der den aktuellen Zustand des Abfrageregisters Ri charakterisiert. So kann der Zustandsparameter Zi beispielsweise mit drei Werten besetzt sein kann, wobei der erste Wert anzeigt, dass noch keine Abfrage erfolgt ist, der zweite Wert anzeigt, dass die Abfrage weitergeleitet wurde und der dritte Wert anzeigt, dass der entsprechende Datensatz vom Fahrzeug eingetroffen ist, so dass das Abrufregister Ri gelöscht werden kann.

Auf diese Weise können Abrufe anhand der Abrufregister R1, R2, ..., Rm in der Abrufverwaltung 14 verarbeitet und nacheinander einzelne oder gleichzeitig mehrere Abrufe R1, R2, ..., Rm ausgeführt werden, um die jeweiligen Datensätze zu empfangen. Üblicherweise werden die Abrufe Ri sequentiell ausgeführt, mit anderen Worten, wenn von der Verarbeitungseinrichtung 11 ein Header aufgrund eines aktuellen Auftrags Ai der Auftragsverwaltung 12 als geeignet und verwertbar beurteilt wird, so wird der dazugehörige Datensatz von der Abrufverwaltung mittels eines Abrufs Ri ausgeführt.

Fig. 4 erläutert die Funktion der Abrufverwaltung 14 in einer zweiten Ausführungsform, in der der Eingang eines als geeignet beurteilten Headern in die Abrufverwaltung 14 nicht sofort zu einem Abruf des entsprechenden Datensatzes führt. In der zweiten Ausführungsform werden die zu den Aufträgen Ai eingehenden Header in der Abrufverwaltung 14 aufgesammelt, bis zu jedem Auftrag Ai eine vorgegebene Anzahl oder alle zur Erledigung des Auftrag Ai benötigten Header eingetroffen sind, so dass gleichzeitig ein Block von Headern zum Abruf gelangen, was Übertragungsbandbreite einspart.

Die Abrufregister R1, R2, ..., Rm umfassen in der zweiten Ausführungsform daher jeweils mehrere Parametersätze, die beispielshaft in der Fig. 4 wiedergegebene sind, wobei andere Konfigurationen der einzelnen Abrufregister Ri, i ∈ {1, ..., m}, m eine natürliche Zahl, möglich sind.

Die Konfiguration wird im Folgenden anhand des Beispiel der Abrufregister R1, R2 und Rm erläutert, wobei im Beispiel m = n gilt, mit anderen Worten, die Anzahl m der Abrufregister R1 bis Rm entspricht der Anzahl n der Aufträge A1 bis An.

Der Parametersatz für das Abrufregister R1 setzt sich in der zweiten Ausführungsform aus den Headern H1 bis Hj zusammen, wobei j die Anzahl der für den Auftrag A1 benötigten Datensätze ist. Ferner gehört zu jedem Header H1 bis Hj der dazugehörige Streckenabschnitt S1, eine Zustandsvariable Z1, wie sie in Zusammenhang mit der ersten Ausführungsform beschrieben ist, sowie einen Identifizierungsparameter, der hier der Einfachheit halber direkt durch den Auftragsparameter A1 wiedergegeben ist.

In gleicher Weise umfasst das Abrufregister R2 die Header H1 bis Hk, wobei k die Anzahl der für den Auftrag A1 benötigten Datensätze ist. Ferner sind noch der Streckenabschnittparameter S2, der Zustandsparameter Z2 und der Auftragsparameter A2 notwendig.

Das Abrufregister Rm betrifft die Header H1 bis HI, wobei I die Anzahl der für den Auftrag Am benötigten Datensätze ist. Ferner sind noch der Streckenabschnittparameter Sm, der Zustandsparameter Zm und der Auftragsparameter Am notwendig, wobei in diesem Beispiel gilt, dass n = m ist. Es ist auch möglich, dass der Index m nicht mit der Auftragsnummer n übereinstimmt, beispielsweise wenn aufgrund der vorgewählten Zeitintervalle bestimmt Aufträge Ai zwar in der Auftragsverwaltung aufgeführt sind, aber im aktuellen Zeitintervall nicht zur Ausführung anstehen.

Ferner können in den genannten Parametersätzen weitere Parameter eingesetzt werden, die in Fig. 4 durch Leerstellen angedeutet sind.

### Bezugszeichenliste

- 1: Schwarm
- 2: Fahrzeug
- 3: Umfeldsensorik Fahrzeug
- 4: Datenaggregator Fahrzeug
- 5: Kommunikationseinrichtung Fahrzeug

- 10: Backend-Rechner
- 11: Verarbeitung der eingehenden Header
- 12: Auftragsverwaltung (Datenbank)
- T: Timer
- A1: Auftrag 1
- A2: Auftrag 2
- An: Auftrag n
- 13: Verwaltung/Speicherung aktuell nicht benötigter Header
- 14: Verwaltung der Abrufe von Datensätzen / Requester
- R1: Abrufregister 1
- R2: Abrufregister 1
- Rm: Abrufregister m
- 15: Fahrzeugverwaltung / Datenanforderung
- 16: Datensatzverwaltung der abgerufenen Datensätze

- 20: Nutzer/Auftraggeber
- S1: Straßensegment 1
- S2: Straßensegment
- Sn: Straßensegment
- F1: Sollzahl Datensätze als Anzahl Fahrzeuge pro Zeiteinheit für Segment S1
- F2: Sollzahl Datensätze als Anzahl Fahrzeuge pro Zeiteinheit für Segment S2
- Fn: Sollzahl Datensätze als Anzahl Fahrzeuge pro Zeiteinheit für Segment Sn
- Q1: Angeforderte Datensätze für Segment S1
- Q2: Angeforderte Datensätze für Segment S2
- Qn: Angeforderte Datensätze für Segment Sn
- I1: Abgerufene Datensätze für Segment S1
- I2: Abgerufene Datensätze für Segment S2
- In: Abgerufene Datensätze für Segment Sn
- t1: Zeitintervall für Auftrag A1
- t2: Zeitintervall für Auftrag A2
- tn: Zeitintervall für Auftrag An

- H1: Header 1
- H2: Header 2
- Hj: Header j
- Hk: Header k
- HI: Header I
- Hm: Header m
- S1: Strecke 1
- S2: Strecke 2
- Sm: Strecke m
- ID1: Auftrags-Identifizierung
- ID2: Auftrags-Identifizierung
- IDm: Auftrags-Identifizierung
- Z1: Zustands-Identifizierung
- Z2: Zustands-Identifizierung
- Zm: Zustands-Identifizierung

## Patentansprüche

1. Verfahren zum Erheben von fahrzeugbasierten Daten, insbesondere Umfelddaten, und deren Übermittlung an einen Backend-Rechner (10), wobei die betreffenden Datensätze vorgegebene Streckenabschnitte (S1, ..., Sn) betreffen, die von einem Schwarm (1) von datensammelnden Fahrzeugen (2) befahren werden,
**dadurch gekennzeichnet, dass**
im Backend-Rechner parametrisierte Aufträge (A1, ..., An) zur Ermittlung von fahrzeugbasierten Daten abgelegt sind, wobei
jeder Auftrag (A1, ..., An) zumindest die folgenden Parameter umfasst:
- Streckenabschnitt (S1, ..., Sn), der den Streckenabschnitt definiert, für den fahrzeugbezogene Daten erhoben werden sollen,
- Schwarmgröße (F1, .., Fn), die definiert wie viele Fahrzeuge pro Zeiteinheit für den genannten Streckenabschnitt Daten erheben sollen, und
- Zeitintervall (t1, .. tn), das definiert, in welchem Zeitintervall Daten für den Streckenabschnitt erfasst werden sollen,
von jedem Fahrzeug (2) des Schwarms (1) fortlaufend streckenbezogene Daten in Form eines Headers an den Backend-Rechner übermittelt werden, wobei ein Header eine Zusammenfassung der temporär im Fahrzeug (2) gespeicherten fahrzeugbasierten Daten darstellt,
ein übermittelter Header mit den durch die Parameter Streckenabschnitt (S1, ..., Sn), Schwarmgröße (F1, .., Fn) und Zeitintervall (t1, ..., tn) definierten Anforderungen der Aufträge (A1, ..., An) verglichen wird, und
im Fall eines positiven Vergleichs der Header als abruffähig klassifiziert wird, so dass der dem Header zugeordnete Datensatz aus dem Fahrzeug abgerufen und einer weiteren Verarbeitung zugeführt werden kann.

2. Verfahren nach Anspruch 1, **dadurch gekennzeichnet, dass** aktuell nicht benötigte Header für einen vorgegebene Zeitraum gespeichert werden.

3. Verfahren nach Anspruch 2, **dadurch gekennzeichnet, dass** aktuell nicht benötigte Header innerhalb des vorgegeben Zeitraums mit den definierten Anforderungen der Aufträge verglichen werden.

4. Verfahren nach einem der vorangegangenen Ansprüche, **dadurch gekennzeichnet, dass** dem Parameter Zeitintervall (t1, ..., tn) jedes Auftrags (A1, ..., An) ferner eine Wiederholungsfrequenz zugeordnet ist, mit der der Auftrag (A1, ..., An) wiederholt wird.

5. Verfahren nach einem der vorangegangenen Ansprüche, **dadurch gekennzeichnet, dass** jeder Auftrag die weiteren Parameter
- bereits angeforderte Datensätze (Q1, ..., Qn) und
- bereits empfangene Datensätze (I1, ... , In) umfasst.

6. Verfahren nach Anspruch 5, **dadurch gekennzeichnet, dass** im Fall eines Abrufs eines abruffähigen Headers die Anforderung des Abrufs im Parameter bereits angeforderte Datensätze (Q1, ..., Qn) vermerkt wird und im Fall eines Empfangs des angeforderten Datensatzes dies im Parameter bereits empfangene Datensätze (I1, ... , In) vermerkt wird.

7. Verfahren nach einem der vorangegangenen Ansprüche, **dadurch gekennzeichnet, dass** jeder abruffähige Header zusammen mit weiteren Parametern in einem Abrufregister (R1, ..., Rm) abgelegt wird, über welches der Abruf der dem Header zugehörigen Datensatz aus dem jeweiligen Fahrzeug (2) erfolgt.

8. Verfahren nach Anspruch 7, **dadurch gekennzeichnet, dass** jedem abruffähigen Header jeweils ein Abrufregister (R1, ..., Rm) zugeordnet wird, mittels dem der Abruf des dazugehörigen Datensatzes aus dem Fahrzeug (2) erfolgt.

9. Verfahren nach Anspruch 7, **dadurch gekennzeichnet, dass** jedem abruffähigen Header jeweils ein Abrufregister (R1, ..., Rm) zugeordnet wird, wobei jedem Abrufregister (R1, ..., Rm) ein Auftrag (A1, ..., An) zugeordnet ist und ein Abrufregister (R1, ..., Rm) mehr als einen Header aufweist.

10. Verfahren nach Anspruch 9, **dadurch gekennzeichnet, dass** die den Headern eines Abrufregisters (R1, ..., Rm) zugeordneten Datensätze aus den entsprechenden Fahrzeugen (2) dann abgerufen werden, wenn die Anzahl der Header eines Abrufregisters (R1, ..., Rm) einen vorgegebenen Wert erreicht.

11. Verfahren nach Anspruch 10, **dadurch gekennzeichnet, dass** der vorgegebene Wert der Schwarmgröße (F1, .., Fn) des jeweiligen Auftrags (A1, ..., An) entspricht.

12. Vorrichtung zum Erheben von fahrzeugbasierten Daten, insbesondere Umfelddaten, und deren Übermittlung an einen Backend-Rechner (10), wobei die Vorrichtung zur Durchführung des Verfahrens nach einem der vorangegangenen Ansprüche eingerichtet und ausgelegt ist, wobei der Backend-Rechner (10) umfasst:
- eine Auftragsverwaltung (12) zur Verwaltung der Aufträge (A1, ..., An),
- eine Verarbeitungseinrichtung (11) zur Verarbeitung und Klassifizierung der eingehenden Header der Fahrzeuge (2) des Schwarms (1), und
- eine Abrufeinrichtung (14) mit Abrufregistern (R1, ..., Rm) zum Abrufen der den als abruffähig klassifizierten Headern zugehörigen Datensätzen aus den Fahrzeugen (2) des Schwarms (1).

13. Vorrichtung nach Anspruch 12, **dadurch gekennzeichnet, dass** der Backend-Rechner (10) weiter umfasst:
- eine Fahrzeugverwaltung (15), die mit den Fahrzeugen kommuniziert und die den Headern zugeordneten Datensätze aus den Fahrzeugen (2) des Schwarms (1) abruft, und
- eine Datensatzverwaltung (16) zur Verwaltung und Bearbeitung der abgerufenen Datensätze.

14. Vorrichtung nach einem der Ansprüche 11, oder 12. **dadurch gekennzeichnet, dass** der Backend-Rechner (10) eine Einrichtung (13) zur temporären Speicherung aktuell nicht benötigter Header aufweist.

## Claims

1. A method for collecting transportation vehicle-based data, in particular environmental data, and transferring the data to a backend computer (10), wherein the respective data sets relate to predefined route sections (S1, ..., Sn) travelled by a swarm (1) of data-collecting vehicles (2), **characterized in that**
parameterized orders (A1, ..., An) for acquisition of transportation vehicle-based data are stored in the backend computer,
wherein each order comprises at least the following parameters:
- route section (S1, ..., Sn) which defines a route section for which transportation vehicle-related data is to be collected,
- swarm size (F1, ..., Fn) which defines how many transportation vehicles per unit of time are to collect data for the specified route section, and
- time interval (t1, ..., tn) which defines a time interval in which data is to be acquired for the route section,
route-related data is continuously transferred to the backend computer from each transportation vehicle (2) of the swarm (1) as a header that includes an overview of the transportation vehicle-based data stored temporarily in the transportation vehicle (2),
a transferred header is compared with requirements of the orders (A1, ..., An) defined by the parameters of the route section (S1, ..., Sn), swarm size (F1, ..., Fn) and time interval (t1, ..., tn),
in response to a positive comparison, the transferred header is classified as capable of being retrieved and the data set assigned to the header is retrieved from the transportation vehicle and transmitted for further processing to the backend computer.

2. The method of claim 1, **characterized in that** headers not currently required are stored for a predefined time period.

3. The method of claim 2, **characterized in that** headers not currently required are compared with the defined requirements of the orders within the predefined time period.

4. The method of one of the preceding claims, **characterized in that** the parameter of the time interval (t1, ..., tn) of each order (A1, ..., An) is additionally assigned a repetition frequency with which the order (A1, ..., An) is repeated.

5. The method of one of the preceding claims, **characterized in that** each order comprises the further parameter
- already requested data sets (Q1, ..., Qn) and
- already received data sets (I1, ..., In).

6. The method of claim 5, **characterized in that**, in response to retrieval of a header capable of being retrieved, the requesting of the retrieval is noted in the parameter of already requested data sets (Q1, ..., Qn), and, in response to reception of the requested data set, the reception is noted in the parameter of already received data sets (I1, ..., In).

7. The method of one of the preceding claims, **characterized in that** each header capable of being retrieved is stored together with further parameters in a retrieval register (R1, ..., Rn), by which the data set associated with the header from the respective transportation vehicle (2) is retrieved.

8. The method of claim 7, **characterized in that** each header capable of being retrieved is respectively assigned a retrieval register (R1, ..., Rn) by which the associated data set is retrieved from the transportation vehicle (2).

9. The method of claim 7, **characterized in that** each header capable of being retrieved is respectively assigned a retrieval register (R1, ..., Rn), wherein each retrieval register (R1, ..., Rn) is assigned an order (A1, ..., An), and a retrieval register (R1, ..., Rn) has more than one header.

10. The method of claim 9, **characterized in that** the data sets assigned to the headers of a retrieval register (R1, ..., Rn) are retrieved from the corresponding transportation vehicles (2) when the number of headers of a retrieval register (R1, ..., Rn) reaches a predefined value.

11. The method of claim 10, **characterized in that** the predefined value corresponds to the swarm size (F1, ..., Fn) of the respective order (A1, ..., An).

12. An apparatus for collecting transportation vehicle-based data, in particular environmental data, and transferring the data to a backend computer (10), wherein the apparatus is configured and designed to carry out the method of one of the preceding claims, wherein the backend computer (10) comprises
- an order management system (12) for managing the orders (A1, ..., An),
- a processing device (11) for processing and classifying the incoming headers of the transportation vehicles (2) of the swarm (1), and
- a retrieval device (14) with retrieval registers (R1, ..., Rn) for retrieving the data sets associated with the headers which are classified as capable of being retrieved from the transportation vehicles (2) of the swarm (1).

13. The apparatus of claim 12, **characterized in that** the backend computer (10) further comprises:
- a transportation vehicle management system (15) which communicates with the transportation vehicles and which retrieves the data sets associated with the headers from the transportation vehicles (2) of the swarm (1); and
- a data set management system (16) for managing and processing the retrieved data sets.

14. The apparatus of one of claims 11 or 12, **characterized in that** the backend computer (10) comprises a device (13) for temporarily storing headers which are not currently required.

## Revendications

1. Procédé pour la collecte de données basées sur les véhicules, en particulier des données environnementales, et pour la transmission à un ordinateur backend (10), les ensembles de données concernés concernant des tronçons de trajet (S1, ..., Sn) prédéterminés qui sont parcourus par une nuée (1) de véhicules collectant des données (2),
**caractérisé en ce que**
des ordres paramétrés (A1, ..., An) sont stockés dans l'ordinateur backend afin de déterminer des données basées sur les véhicules,
chaque ordre (A1, ..., An) comprenant au moins les paramètres suivants :
- tronçon de trajet (S1, ..., Sn) qui définit le tronçon de trajet pour lequel des données relatives aux véhicules doivent être collectées,
- taille de nuée (F1, ..., Fn) qui définit le nombre de véhicules par unité de temps devant collecter des données pour le tronçon de trajet mentionné, et
- intervalle de temps (t1, .. tn) qui définit dans quel intervalle de temps les données doivent être collectées pour le tronçon de trajet,
des données liées au trajet sont transmises en continu à l'ordinateur backend par chaque véhicule (2) de la nuée (1) sous la forme d'un en-tête, un en-tête représentant un résumé des données basées sur les véhicules et stockées temporairement dans le véhicule (2),
un en-tête transmis est comparé aux exigences des ordres (A1, ..., An) définies par les paramètres tronçon (S1, ..., Sn), taille de la nuée (F1, ..., Fn) et intervalle de temps (t1, ..., tn), et
en cas de comparaison positive, l'en-tête est classé comme pouvant être consulté, de sorte que l'ensemble de données associé à l'en-tête peut être consulté dans le véhicule et soumis à un traitement ultérieur.

2. Procédé selon la revendication 1, **caractérisé en ce que** les en-têtes actuellement non nécessaires sont stockés pendant une période de temps prédéterminée.

3. Procédé selon la revendication 2, **caractérisé en ce que** les en-têtes actuellement non nécessaires sont comparés aux exigences définies des ordres dans l'intervalle de temps prédéfini.

4. Procédé selon l'une des revendications précédentes, **caractérisé en ce que** le paramètre Intervalle de temps (t1, ..., tn) de chaque ordre (A1, ..., An) est en outre associé à une fréquence de répétition à laquelle l'ordre (A1, ..., An) est répété.

5. Procédé selon l'une quelconque des revendications précédentes, **caractérisé en ce que** chaque ordre comprend les paramètres supplémentaires suivants
- ensembles de données déjà demandés (Q1, ..., Qn) et
- ensembles de données déjà reçus (I1, ... , In).

6. Procédé selon la revendication 5, **caractérisé en ce que,** dans le cas de la consultation d'un en-tête pouvant être consulté, la demande de consultation est notée dans le paramètre Ensemble de données déjà demandés (Q1, ..., Qn) et, dans le cas d'une réception de l'ensemble de données demandé, ceci est noté dans le paramètre Ensembles de données déjà reçus (I1, ... , In).

7. Procédé selon l'une des revendications précédentes, **caractérisé en ce que** chaque en-tête pouvant être consulté est stocké avec d'autres paramètres dans un registre de consultation (R1, ..., Rm), au moyen duquel la consultation de l'ensemble de données associé à l'en-tête est effectuée à partir du véhicule (2) respectif.

8. Procédé selon la revendication 7, **caractérisé en ce qu'**à chaque en-tête pouvant être consulté est associé respectivement un registre de consultation (R1, ..., Rm) au moyen duquel la consultation de l'ensemble de données correspondant à partir du véhicule (2) est effectuée.

9. Procédé selon la revendication 7, **caractérisé en ce qu'**un registre de consultation (R1, ..., Rm) est respectivement associé à chaque en-tête pouvant être consulté, un ordre (A1, ..., An) étant associé à chaque registre de consultation (R1, ..., Rm) et un registre de consultation (R1, ..., Rm) présentant plus d'un en-tête.

10. Procédé selon la revendication 9, **caractérisé en ce que** les ensembles de données associés aux en-têtes d'un registre de consultation (R1, ..., Rm) sont consultés à partir des véhicules (2) correspondants lorsque le nombre d'en-têtes d'un registre de consultation (R1, ..., Rm) atteint une valeur prédéterminée.

11. Procédé selon la revendication 10, **caractérisé en ce que** la valeur prédéterminée correspond à la taille de la nuée (F1, ..., Fn) de l'ordre respectif (A1, ..., An).

12. Dispositif pour la collecte de données basées sur les véhicules, notamment des données environnementales, et la transmission à un ordinateur backend (10), le dispositif étant configuré et conçu pour mettre en oeuvre le procédé selon l'une des revendications précédentes, l'ordinateur backend (10) comprenant :
- une gestion des ordres (12) pour gérer les ordres (A1, ..., An),
- un dispositif de traitement (11) pour traiter et classer les en-têtes entrants des véhicules (2) de la nuée (1), et
- un dispositif de consultation (14) avec des registres de consultation (R1, ..., Rm) pour consulter les ensembles de données associés aux en-têtes classés comme pouvant être consultés des véhicules (2) de la nuée (1).

13. Dispositif selon la revendication 12, **caractérisé en ce que** l'ordinateur backend (10) comprend en outre :
- une gestion des véhicules (15) qui communique avec les véhicules et récupère les ensembles de données associés aux en-têtes dans les véhicules (2) de la nuée (1), et
- une gestion des ensembles de données (16) pour gérer et traiter les ensembles de données consultés.

14. Dispositif selon l'une des revendications 11 ou 12, **caractérisé en ce que** l'ordinateur backend (10) présente un dispositif (13) pour le stockage temporaire des en-têtes actuellement non nécessaires.
